# EUROPÄISCHE PATENTSCHRIFT

(11) **EP 2 819 803 B1**
(45) Veröffentlichungstag und Bekanntmachung des Hinweises auf die Patenterteilung: **04.01.2023**
(21) Anmeldenummer: 13713717.0
(22) Anmeldetag: 06.03.2013
(51) Int. Cl.: B23K 9/32, B23K 9/29

(54) **STECKERTEIL UND BUCHSENTEIL ZUR LÖSBAREN VERBINDUNG EINES ROHRBOGENS EINES GASGEKÜHLTEN SCHWEISSBRENNERS MIT EINEM SCHLAUCHPAKET SOWIE VERBINDUNGSEINRICHTUNG MIT EINEM SOLCHEN STECKERTEIL UND EINEM SOLCHEN BUCHSENTEIL**
PLUG PART AND SOCKET PART FOR DETACHABLY CONNECTING A TUBE ELBOW OF A GAS-COOLED WELDING TORCH TO A HOSE PACKET, AND CONNECTING DEVICE WITH SUCH A PLUG PART AND SUCH A SOCKET PART
RACCORDS MÂLE ET FEMELLE SERVANT À RACCORDER DE MANIÈRE DÉMONTABLE UN COUDE D'UN CHALUMEAU DE SOUDAGE REFROIDI PAR GAZ À UN FAISCEAU DE FLEXIBLES, ET SYSTÈME DE RACCORDEMENT ÉQUIPÉ DE TELS RACCORDS MÂLE ET FEMELLE

(30) Priorität: 30.03.2012 AT 501142012
(43) Veröffentlichungstag der Anmeldung: 07.01.2015
(73) Patentinhaber: Fronius International GmbH, 4643 Pettenbach (AT)
(72) Erfinder: OBERNDORFER, Klaus, 4655 Vorchdorf (AT); PLATZER, Daniel, 4600 Wels (AT); ATTWENGER, Wolfgang, 4814 Neukirchen (AT)
(74) Vertreter: SONN Patentanwälte OG
(86) Internationale Anmeldenummer: PCT/AT2013/050056
(87) Internationale Veröffentlichungsnummer: WO 2013/142887

(56) Entgegenhaltungen:
- WO-A1-2011/014900
- WO-A2-2007/146878
- DE-A1- 2 146 404
- DE-A1- 19 513 458
- DE-U1- 9 216 866
- DE-U1- 29 616 343
- US-A1- 2004 074 887

## Beschreibung

Die Erfindung betrifft einen Steckerteil zur lösbaren Verbindung eines Rohrbogens eines gasgekühlten Schweißbrenners mit einem an einem Schlauchpaket allenfalls unter Zwischenanordnung eines Brennergehäuses angeordneten Buchsenteil, mit einem zylindrischen Rohrelement mit einem Flansch und einem axial verlaufenden Kanal für einen Schweißdraht und ein Schutzgas, und einer drehbar am Rohrelement angeordneten Überwurfmutter mit einem Innengewinde zur Verbindung mit einem entsprechenden Außengewinde am Buchsenteil.

Weiters betrifft die Erfindung einen Buchsenteil zur lösbaren Verbindung eines Schlauchpakets mit einem an einem Rohrbogen eines gasgekühlten Schweißbrenners angeordneten Steckerteil, mit einem zumindest teilweise zylindrisch ausgebildeten Endstück mit einem axial verlaufenden Kanal für einen Schweißdraht und ein Schutzgas, und mit einem Außengewinde zur Verbindung mit einem entsprechenden Innengewinde einer Überwurfmutter des Steckerteils.

Schließlich betrifft die Erfindung eine Verbindungseinrichtung zur lösbaren Verbindung eines Rohrbogens eines gasgekühlten Schweißbrenners mit einem Schlauchpaket, wobei der Rohrbogen einen oben genannten Steckerteil und das Schlauchpaket einen oben genannten Buchsenteil aufweist.

Rohrbögen für Schweißbrenner der gegenständlichen Art sind beispielsweise aus der WO 2011/014900 A1 oder der DE 9216866 U1 bekanntgeworden.

Die US 2004/074887 A1 (Basis für den Oberbegriff der Ansprüche 1, 6 und 7) und die WO 2007/146878 A2 beschreiben Schweißbrenneranordnungen, die mechanisch und elektrisch mit einem Schweißkörper verbindbar sind, indem der Rohrbogen über eine Überwurfmutter und ein entsprechendes Anschlussstück am entsprechenden Gegenstück befestigbar ist.

Aus der DE 296 16 343 U1 geht eine Verbindungseinrichtung zur lösbaren Verbindung eines Schweißbrenners unter Verwendung einer bajonettartigten Steckereinführung hervor.

Üblicherweise werden Rohrbögen lösbar mit dem Schlauchpaket oder dem Brennergehäuse bzw. Brennergriff eines Schweißbrenners verbunden. Dadurch kann der Schweißer einerseits aus verschieden gestalteten Rohrbögen wählen und den jeweils geeignetsten für die Durchführung des Schweißprozesses verwenden und andererseits einen Tausch des Rohrbogens vornehmen, wenn dieser beschädigt oder verschmutzt ist. Übliche Verbindungen zwischen Rohrbogen und Schlauchpaket oder Brennergehäuse werden mit entsprechenden Gewinden oder Schnellverschlüssen wie z.B. Bajonettverschlüssen vorgenommen. Neben der notwendigen mechanischen Stabilität der Verbindung zwischen Rohrbogen und Schlauchpaket bzw. Brennergriff oder Brennergehäuse soll die Verbindung auch sicherstellen, dass im Wesentlichen kein Schutzgas durch Undichtheiten austritt. Da über die Verbindungseinrichtung, also den Steckerteil und Buchsenteil, auch elektrische Energie übertragen wird, soll die Verbindungseinrichtung auch die entsprechende elektrische Leitung gewährleisten. Für das Schweißen ist es von Vorteil, wenn der Rohrbogen zumindest in innerhalb eines gewissen Bereichs drehbar ausgebildet ist, sodass der Schweißbrenner immer im optimalen Winkel zur beabsichtigten Schweißnaht gehalten werden kann.

Verbindungseinrichtungen zwischen Rohrbogen und Schlauchpaket bzw. Brennergehäuse eines Schweißbrenners bekannter Art erfüllen häufig nur einen Teil der genannten Forderungen und sind in Ihrer Handhabung komplizierter.

Die Aufgabe der vorliegenden Erfindung besteht daher in der Schaffung eines Steckerteils und eines Buchsenteils einer Verbindungseinrichtung zur lösbaren Verbindung eines Rohrbogens eines gasgekühlten Schweißbrenners mit einem Schlauchpaket, durch welche die obigen Forderungen erfüllt werden können. Der Steckerteil und Buchsenteil einer solchen Verbindungseinrichtung soll möglichst einfach und kostengünstig herstellbar sein. Zusätzlich soll zumindest eine Winkellage bzw. Bezugslage des Rohrbogens gegenüber dem Schlauchpaket oder Brennergehäuse einfach eingestellt werden können.

Gelöst wird die erfindungsgemäße Aufgabe durch den im Anspruch 1 definierten Steckerteil.

Durch den Dichtungsring am Rohrelement, der aus geeignetem elastischen Material, wie z.B. Silikon gebildet sein kann, wird verhindert, dass Schutzgas aus dem axial verlaufenden Kanal im Bereich der Verbindung zwischen Steckerteil und Buchsenteil austritt. Durch die Fase am Flansch des Rohrelements des Steckerteils wird ein optimaler Stromübergang zwischen Steckerteil und zugehörigem Buchsenteil erzielt. Durch die drehbar am Rohrelement angeordnete Überwurfmutter wird der Steckerteil optimal an den zugehörigen Buchsenteil angepresst und eine optimale mechanische und elektrische Verbindung hergestellt. Eine derartige Fase am Flansch des Rohrelements lässt sich besonders einfach und kostengünstig herstellen.

Die Bohrung, welche nicht gezwungenermaßen durchgehend sein muss, sondern auch beispielsweise in Form einer Sacklochbohrung ausgebildet sein kann, ist besonders einfach und rasch herstellbar.

Bei Vorsehen mehrerer Aufnahmeöffnungen für ein stiftförmiges Element des Buchsenteils gemäß der Erfindung werden in bestimmten Winkelabständen mehrere Bezugslagen eingestellt, welche der Schweißer je nach Schweißprozess auswählen kann. Eine entsprechende Markierung am Steckerteil und allenfalls Buchsenteil, beispielsweise mit entsprechenden Kerben oder Farbmarkierungen kann diesbezüglich eine Erleichterung bieten.

Wenn die Überwurfmutter das Ende des Rohrelements überragt, und ein Anschlagelement zur Verhinderung eines axialen Verschiebens der Überwurfmutter hinter das Ende des Rohrelements vorgesehen ist, kann das Rohrelement vor Beschädigung oder Deformierung geschützt werden.

Zwischen der Überwurfmutter und dem Flansch des Rohrelements kann ein Gleitring aus elektrisch leitfähigem Material angeordnet sein. Durch einen derartigen Gleitring aus elektrisch leitfähigem Material kann eine Veränderung der Winkellage des Rohrbogens gegenüber dem Brennergriff oder Schlauchpaket einfach vorgenommen werden, ohne dass die Überwurfmutter vollständig geöffnet werden muss. Durch das elektrisch leitfähige Material wird sichergestellt, dass die Stromübertragung vom Schlauchpaket zum Rohrbogen und in der Folge zur Kontaktdüse ungehindert gewährleistet wird.

Die Überwurfmutter weist in Richtung des freien Endes des Rohrbogens vorzugsweise kleiner werdenden Durchmesser auf, und kann insbesondere kegelstumpfförmig ausgebildet sein. Eine derartige Ausbildungsform erleichtert die Handhabung der Überwurfmutter und verhindert bzw. reduziert entsprechende Kanten zwischen der Überwurfmutter und dem Rohrbogen.

Die Überwurfmutter kann eine Kunststoffumhüllung aufweisen. Eine derartige Kunststoffumhüllung aus geeignetem Material und in entsprechender Ausgestaltung, beispielsweise mit axialen Riefen, erleichtert ebenfalls die Handhabung und stellt eine sowohl elektrische als auch thermische Isolierung zum darunter liegenden Steckerteil des Schweißbrenners her.

Gelöst wird die erfindungsgemäße Aufgabe auch durch einen im Anspruch 6 definierten Buchsenteil.

Durch die zwei kreuzweise angeordneten Schlitze kann eine optimale Verbindung in Form einer Spreizzange oder Spannzange hergestellt werden. Durch die zwei kreuzweise angeordneten Schlitze wird eine Art Spreizzange oder Spannzange mit vier beweglichen Backen geschaffen, welche durch die Überwurfmutter des zugehörigen Steckerteils zusammengepresst werden. Dadurch resultiert eine optimale Verbindung des Steckerteils mit dem Buchsenteil und ein optimaler elektrischer Kontakt der elektrisch leitenden Komponenten. Durch Anziehen der Überwurfmutter des zugehörigen Steckerteils werden die entstehenden Backen des Endstücks des Buchsenteils entsprechend gegen das zylindrische Rohrelement des Steckerteils gepresst und bewirken dort eine dichte und optimal leitende Verbindung zwischen Buchsenteil und Steckerteil. Durch die Fase am Flansch des zylindrischen Rohrelements wird die Kontaktfläche zum zugehörigen Steckerteil vergrößert und somit der elektrische Übergang verbessert. Ein derartig ausgebildeter Buchsenteil ist besonders rasch und kostengünstig herstellbar. Da, gemäß der Erfindung, mehrere Aufnahmeöffnungen in verschiedenen Winkellagen im Steckerteil angeordnet sind, kann das stiftförmige Element am Buchsenteil in diesen verschiedenen Winkellagen einrasten, wodurch bestimmte Positionen des Rohrbogens gekennzeichnet werden können. Durch das im Wesentlichen halbkugelförmige Ende des federnd gelagerten stiftförmigen Elements kann dieses bei Verdrehen des Rohrbogens gegenüber dem Buchsenteil leicht verdrängt werden und eine andere Lage des Rohrbogens eingenommen werden.

Gelöst wird die erfindungsgemäße Aufgabe auch durch eine im Anspruch 7 definierte Verbindungseinrichtung zur lösbaren Verbindung eines Rohrbogens eines gasgekühlten Schweißbrenners mit einem Schlauchpaket, wobei der Rohrbogen einen Steckerteil mit den oben genannten Merkmalen und das Schlauchpaket einen Buchsenteil mit den oben genannten Merkmalen aufweist. Zu den damit erzielbaren Vorteilen wird auf die obige Beschreibung des Steckerteils und Buchsenteils verwiesen.

Der Steckerteil ist mit dem Rohrbogen verbunden, vorzugsweise verlötet. Eine derartige Verbindung kann besonders rasch und einfach hergestellt werden. Alternativ dazu kann die Verbindung auch durch Pressen oder Kleben mit geeigneten Klebstoffen hergestellt werden.

Der Buchsenteil ist mit dem Ende eines Schlauchpakets allenfalls unter Zwischenanordnung eines Brennergehäuses verbunden. Die Verbindung des Buchsenteils mit dem Ende des Schlauchpakets oder dem Brennergehäuse kann ebenfalls durch verschiedene Arten erfolgen, insbesondere durch Kleben.

Wenn der Rohrbogen gegenüber dem Schlauchpaket um 360° verdrehbar ist, wobei zumindest eine Winkelposition des Rohrbogens durch die zumindest eine Aufnahmeöffnung im Steckerteil und das stiftförmige Element im Buchsenteil festgelegt ist, kann eine besondere Flexibilität für sämtliche Schweißverfahren erzielt werden.

Um zu verhindern dass ein Rohrbogen eines gasgekühlten Schweißbrenners mit dem Buchsenteil am Brennergehäuse oder Schlauchpaket für einen wassergekühlten Schweißbrenner angeschlossen werden kann, sind die Dimensionen der Steckerteile und Buchsenteile von gasgekühlten Schweißbrennern und wassergekühlten Schweißbrennern vorzugsweise unterschiedlich ausgebildet. Eine derartige unterschiedliche Ausbildung kann beispielsweise in Form verschiedener Durchmesser der Überwurfmutter und dgl. erzielt werden.

Die vorliegende Erfindung wird anhand der beigefügten, schematischen Zeichnungen näher erläutert. Darin zeigen:
- Fig. 1: eine schematische Darstellung einer Schweißvorrichtung;
- Fig. 2: einen Rohrbogen mit einem Steckerteil und zugehörigen Buchsenteil in getrenntem Zustand in teilweise geschnittener Darstellung;
- Fig. 3: den Rohrbogen mit Steckerteil und Buchsenteil gemäß Fig. 2 in verbundenem Zustand in teilweise geschnittener Darstellung;
- Fig. 4: den Rohrbogen mit Steckerteil und Buchsenteil gemäß Fig. 2 in verbundenem Zustand in teilweise geschnittener Darstellung;
- Fig. 5: eine Stirnansicht auf den mit dem Rohrbogen verbundenen Steckerteil gemäß den Fig. 2 bis 4;
- Fig. 6: eine Stirnansicht auf den Buchsenteil gemäß den Fig. 2 bis 4; und
- Fig. 7: eine Seitenansicht auf den Buchsenteil gemäß den Fig. 2 bis 4 in ungeschnittener Darstellung.

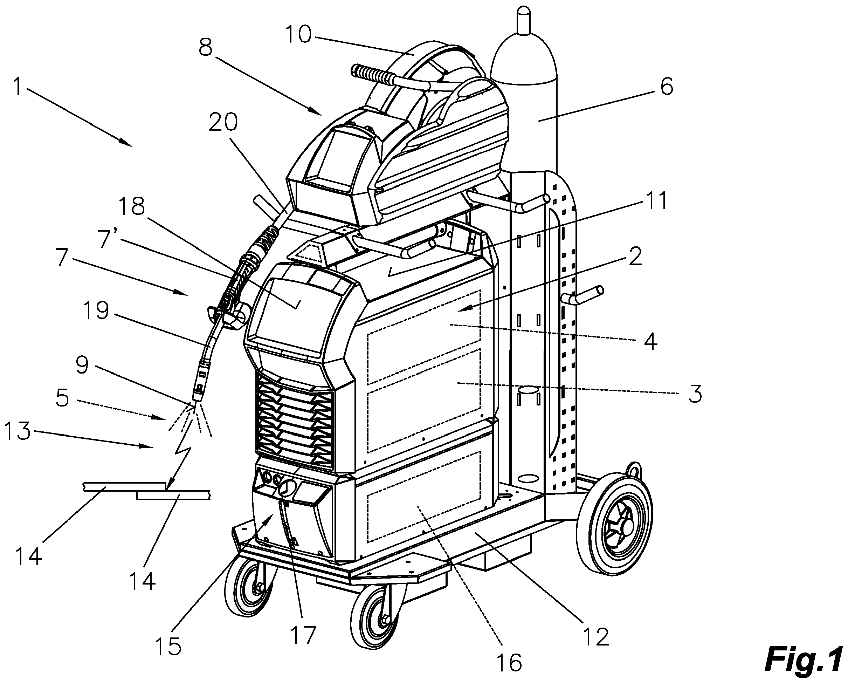

In Fig. 1 ist eine Schweißvorrichtung 1 für verschiedenste Prozesse bzw. Verfahren, wie z.B. MIG/MAG-, WIG/TIG-, Elektroden-, Doppeldraht/Tandem-Schweißverfahren, Plasma- oder Lötverfahren usw., gezeigt.

Die Schweißvorrichtung 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventilen, usw.. Die Steuervorrichtung 4 ist beispielsweise mit einem Steuerventil verbunden, welches in einer Versorgungsleitung für ein Schutzgas 5, wie beispielsweise CO₂, Helium oder Argon und dgl., zwischen einem Gasspeicher 6 und einem Schweißbrenner 7 angeordnet ist.

Zudem kann über die Steuervorrichtung 4 noch eine Vorrichtung 8 zur Förderung eines Schweißdrahts 9 von einer Vorratstrommel 10 bzw. einer Drahtrolle in den Bereich des Schweißbrenners 7 angesteuert werden, wie es beispielsweise für das MIG/MAG-Schweißen üblich ist. Selbstverständlich kann die Fördervorrichtung 8 auch in der Schweißvorrichtung 1, insbesondere im Gehäuse 11 der Stromquelle 2, integriert und nicht, wie in Fig. 1 dargestellt, als Zusatzgerät auf einem Fahrwagen 12 positioniert sein. Die Fördervorrichtung 8 für den Schweißdraht 9 kann auch direkt auf der Schweißvorrichtung 1 aufgesetzt werden, wobei das Gehäuse 11 der Stromquelle 2 an der Oberseite zur Aufnahme der Fördervorrichtung 8 ausgebildet ist, und der Fahrwagen 12 entfallen kann.

Der Schweißdraht 9 kann von einer Fördervorrichtung 8 auch außerhalb des Schweißbrenners 7 an die Prozessstelle zugeführt werden, wobei im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13, insbesondere eines Arbeitslichtbogens, zwischen der Elektrode bzw. dem Schweißdraht 9 und einem aus einem oder mehreren Teilen gebildeten Werkstück 14 wird über eine Schweißleitung (nicht dargestellt) vom Leistungsteil 3 der Stromquelle 2, dem Schweißbrenner 7, insbesondere der Elektrode bzw. dem Schweißdraht 9, zugeführt. Das zu verschweißende Werkstück 14 wird über eine weitere Schweißleitung (nicht dargestellt) für das weitere Potential, insbesondere ein Masse-Kabel, mit der Stromquelle 2 verbunden, wodurch über den Lichtbogen 13 bzw. einem gebildeten Plasmastrahl ein Stromkreis für einen Prozess aufgebaut werden kann. Bei Verwendung eines Brenners mit internem Lichtbogen 13, wie dies bei einem Plasma-Brenner der Fall sein kann, werden die beiden Schweißleitungen zum Brenner geführt, sodass im Brenner ein entsprechender Stromkreis aufgebaut werden kann (nicht dargestellt).

Zum Kühlen des Schweißbrenners 7 wird dieser über ein Kühlgerät 15 unter Zwischenschaltung allfälliger Komponenten, wie beispielsweise einem Strömungswächter, mit einem Flüssigkeitsbehälter, insbesondere einem Wasserbehälter 16 mit einer Füllstandsanzeige 17, verbunden. Bei Inbetriebnahme des Schweißbrenners 7 wird das Kühlgerät 15, insbesondere eine für die im Wasserbehälter 16 angeordnete Flüssigkeit verwendete Flüssigkeitspumpe, gestartet, wodurch eine Kühlung des Schweißbrenners 7 bewirkt wird. Wie bei dem dargestellten Ausführungsbeispiel gezeigt, wird das Kühlgerät 15 auf dem Fahrwagen 12 positioniert, auf das anschließend die Stromquelle 2 gestellt wird. Die einzelnen Komponenten der Schweißvorrichtung 1, also die Stromquelle 2, das Drahtvorschubgerät 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Die Schweißvorrichtung 1, insbesondere die Stromquelle 2, weist weiters eine Ein- und/oder Ausgabevorrichtung 18 auf, über welche die unterschiedlichsten Schweißparameter, Betriebsarten oder Schweißprogramme des Schweißgerätes 1 eingestellt bzw. aufgerufen und angezeigt werden können. Die über die Ein- und/oder Ausgabevorrichtung 18 eingestellten Schweißparameter, Betriebsarten oder Schweißprogramme werden an die Steuervorrichtung 4 weitergeleitet und von dieser anschließend die einzelnen Komponenten der Schweißvorrichtung 1 angesteuert bzw. entsprechende Sollwerte für die Regelung oder Steuerung vorgegeben.

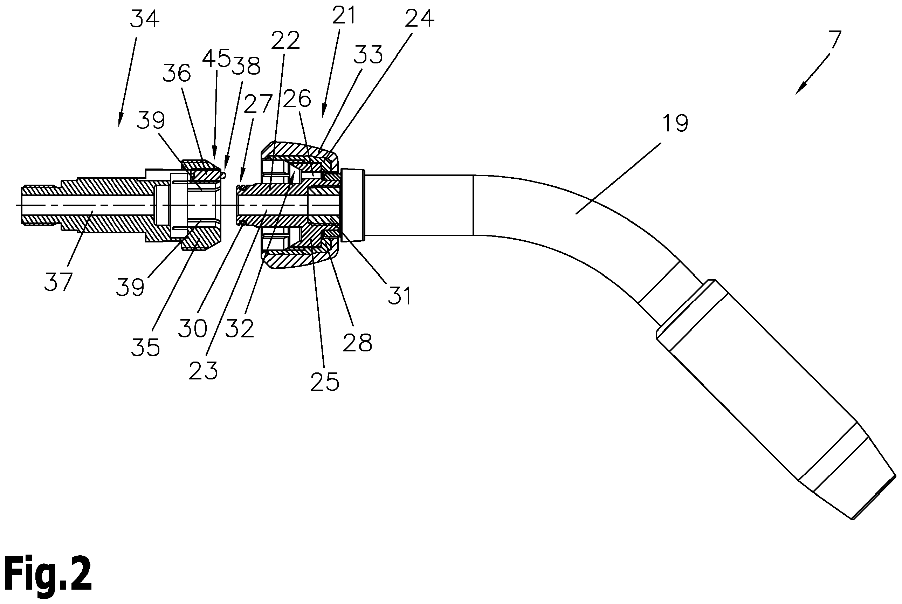

Beim dargestellten Ausführungsbeispiel ist der Schweißbrenner 7, umfassend einen Rohrbogen 19 und allenfalls ein Brennergehäuse 7' über ein Schlauchpaket 20 mit der Schweißvorrichtung 1 verbunden. Im Schlauchpaket 20 sind die einzelnen Leitungen, wie beispielsweise die Versorgungsleitung, Leitungen für den Schweißdraht 9, das Schutzgas 5, den Kühlkreislauf, die Datenübertragung, usw., von der Schweißvorrichtung 1 zum Schweißbrenner 7 angeordnet, wogegen das Masse-Kabel bevorzugt gesondert an der Stromquelle 2 angeschlossen wird. Das Schlauchpaket 20 wird vorzugsweise über eine nicht dargestellte Kupplungsvorrichtung an der Stromquelle 2 oder der Fördervorrichtung 8 angeschlossen, wogegen die einzelnen Leitungen im Schlauchpaket 20 am bzw. im Schweißbrenner 7 befestigt sind. Damit eine entsprechende Zugentlastung des Schlauchpakets 20 gewährleistet ist, kann das Schlauchpaket 20 über eine Zugentlastungsvorrichtung mit dem Gehäuse 11 der Stromquelle 2 oder der Fördervorrichtung 8 verbunden sein (nicht dargestellt). Um einen Tausch des Rohrbogens 19 des Schweißbrenners 7 zu ermöglichen, ist dieser über eine entsprechende Verbindungseinrichtung mit dem Schlauchpaket 20 oder einem Brennergehäuse 7', welches am Schlauchpaket 20 befestigt ist, verbunden. Die Verbindungseinrichtung beinhaltet einen anhand der Figuren 2 bis 7 näher erläuterten Steckerteil 21, der mit dem Rohrbogen 19 des Schweißbrenners 7 verbunden ist und einen Buchsenteil 34, der mit dem Schlauchpaket 20 oder einem mit dem Schlauchpaket 20 verbundenen Brennergehäuse 7' verbunden ist.

Grundsätzlich müssen für die unterschiedlichen Schweißverfahren bzw. Schweißvorrichtungen 1, wie beispielsweise WIG-Geräte, MIG/MAG-Geräte oder Plasmageräte, nicht alle zuvor benannten Komponenten verwendet bzw. eingesetzt werden. Wenn der Schweißbrenner 7 als gasgekühlter Schweißbrenner 7 ausgeführt ist, kann das Kühlgerät 15 auch entfallen. Die Schweißvorrichtung 1 wird zumindest durch die Stromquelle 2, die Fördervorrichtung 8 und allenfalls das Kühlgerät 15 gebildet, wobei diese Komponenten auch in einem gemeinsamen Gehäuse 11 angeordnet sein können. Es können noch weitere Teile bzw. Komponenten, wie beispielsweise ein Schleifschutz am Drahtvorschubgerät 8 oder ein Optionsträger an einer Haltevorrichtung für den Gasspeicher 6 usw., angeordnet werden.

Die in Fig. 1 dargestellte Ausführungsform einer Schweißvorrichtung 1 stellt nur eine von vielen Möglichkeiten dar. Insbesondere können die Schweißvorrichtungen 1 hinsichtlich der Zuführung des Schweißdrahts 9, der Länge des Schlauchpakets 20, der Art, Position und Anzahl von Fördervorrichtungen 8 für den Schweißdraht 9, dem Vorhandensein eines Drahtpuffers (nicht dargestellt) und vielem mehr variieren.

Fig. 2 zeigt einen Rohrbogen 19 mit einem Steckerteil 21 und zugehörigen Buchsenteil 34 in getrenntem Zustand in teilweise geschnittener Darstellung. Der Steckerteil 21 ist mit dem Rohrbogen 19 des Schweißbrenners 7 verbunden, vorzugsweise verlötet. Der Steckerteil 21 umfasst ein zylindrisches Rohrelement 22 mit einem darin axial verlaufenden Kanal 23 für einen Schweißdraht 9 und ein Schutzgas 5 (nicht dargestellt). Am zylindrischen Rohrelement 22 des Steckerteils 21 ist eine Überwurfmutter 24 drehbar angeordnet, welche Überwurfmutter 24 ein Innengewinde aufweist, das auf ein entsprechendes Außengewinde an einem zumindest teilweise zylindrisch ausgebildeten Endstück 35 des zugehörigen Buchsenteils 34 aufschraubbar ist. Um das Ende 27 des Rohrelements 22 vor Deformation zu schützen, ist es von Vorteil wenn die Überwurfmutter 24 das Ende 27 des Rohrelements 22 überragt und ein Anschlagelement 28 vorgesehen ist, welches ein axiales Verschieben der Überwurfmutter 24 hinter das Ende 27 des Rohrelements 22 verhindert. Die Möglichkeit ist bei der dargestellten Ausführungsform nicht realisiert. Der Steckerteil 21 weist einen Flansch 25 auf, auf dem eine Fase 32 angeordnet ist, die bei Verbindung des Steckerteils 21 mit dem zugehörigen Buchsenteil 34 mit einer entsprechend korrespondierend ausgebildeten Fase 45 am Buchsenteil 34 zusammenläuft. Durch die Fase 32 am Steckerteil 21 und Fase 45 am Buchsenteil 34 wird ein optimaler elektrischer Kontakt gewährleistet. Am Flansch 25 des Steckerteils 21 kann zumindest eine Aufnahmeöffnung 26 vorgesehen sein, in welche Aufnahmeöffnung 26 ein entsprechend gestaltetes stiftförmiges Element 36 des Buchsenteils 34 aufgenommen kann. Bei Übereinstimmung der Position des stiftförmigen Elements 36 des Buchsenteils 34 und der Aufnahmeöffnung 26 am Steckerteil 21 wird eine bestimmte Winkelposition des Rohrbogens 19 festgelegt. Bei der Anordnung mehrere Aufnahmeöffnungen 26 können mehrere Winkelpositionen des Rohrbogens 19 festgelegt werden. Die Aufnahmeöffnung 26 ist im einfachsten Fall durch eine Bohrung gebildet. Um zu verhindern, dass Schutzgas 5, welches durch den axial verlaufenden Kanal 23 des Steckerteils 21 geführt wird, im Bereich der Verbindung austritt, kann ein Dichtungsring 30 am Rohrelement 22 angeordnet sein.

Zwischen Überwurfmutter 24 und Flansch 25 des Rohrelements 22 kann ein Gleitring 31 aus elektrisch leitfähigem Material angeordnet sein. Dieser Gleitring 31 erleichtert das Verdrehen des Rohrbogens 19 bei gelockerter Überwurfmutter 24.

Die Überwurfmutter 24 kann in Richtung des freien Endes des Rohrbogens 19 im Bereich der Kontaktdüse kleiner werdenden Durchmesser aufweisen und im Wesentlichen kegelstumpfförmig ausgebildet sein. Dies erleichtert die Handhabung und verhindert das Vorhandensein einer zu großen Abstufung zwischen Überwurfmutter 24 und Rohrbogen 19. Vorzugsweise weist die Überwurfmutter 24 eine Kunststoffumhüllung 33 auf, durch welche eine thermische und elektrische Isolierung hergestellt wird.

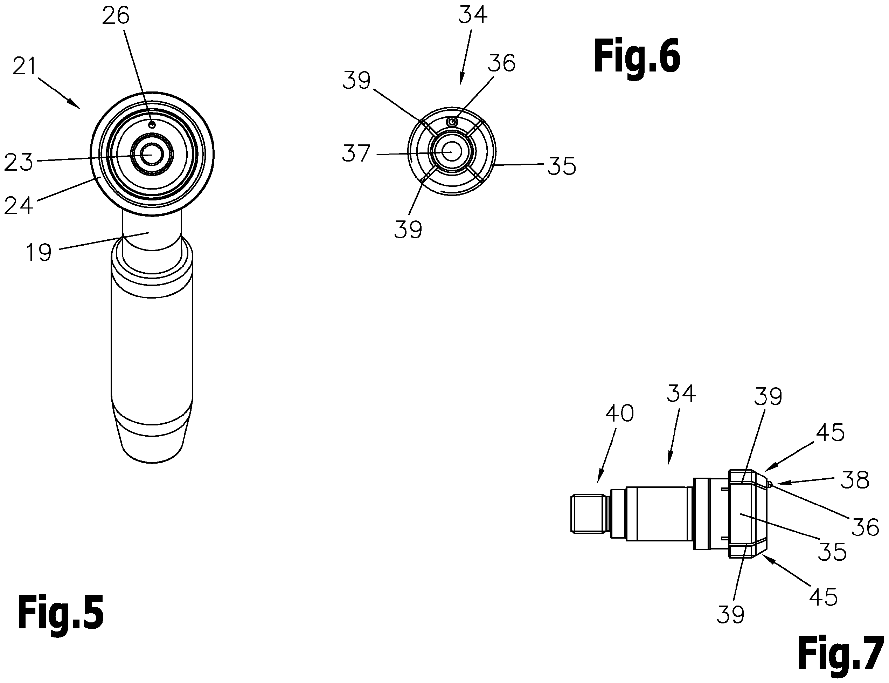

Der zum Steckerteil 21 gehörende Buchsenteil 34 weist ein zumindest teilweise zylindrisch ausgebildetes Endstück 35 und einen axial verlaufenden Kanal 37 für den Schweißdraht 9 und das Gas 5 (nicht dargestellt) auf. Am Endstück 35 ist ein Außengewinde zur Verbindung mit einem entsprechenden Innengewinde der Überwurfmutter 24 des Steckerteils 21 angeordnet. Erfindungsgemäß weist das Endstück 35 zumindest einen axialen Schlitz 39, vorzugsweise zwei kreuzweise angeordnete axiale Schlitze 39 (siehe Fig. 6) auf. Dadurch wird eine Art Spreizzange oder Spannzange gebildet, indem der Buchsenteil 34 bzw. dessen Endstück 35 in vier Backen geteilt wird, welche beim Festschrauben der Überwurfmutter 24 des Steckerteils 21 gegen das zylindrische Rohrelement 22 des Steckerteils 21 gepresst werden. Es resultiert eine entsprechend gute elektrische und mechanische Verbindung und eine optimale Dichtheit der Kanäle 23, 37 des Steckerteils 21 bzw. Buchsenteils 34. An der Stirnseite des Endstücks 35 des Buchsenteils 34 kann sich ein federnd gelagertes stiftförmiges Element 36 befinden, das zur Festlegung zumindest einer Winkelposition bzw. Bezugslage des Rohrbogens 19 in zumindest eine Aufnahmeöffnung 26 im Steckerteil 21 ragen kann. Das stiftförmige Element 36 weist vorzugsweise im Wesentlichen halbkugelförmiges Ende 38 auf, sodass es bei Verdrehung des Rohrbogens 19 leicht aus der Aufnahmeöffnung 26 ausgelenkt werden kann.

Der dargestellte Buchsenteil 34 der Verbindungseinrichtung wird mit einem Schlauchpaket 20 (nicht dargestellt) oder einem Brennergehäuse 7' oder Brennergriff des Schweißbrenners 7 verbunden. Zu diesem Zweck ist ein entsprechendes Verbindungselement 40, beispielsweise eine Schraubverbindung, am Buchsenteil 34 vorgesehen.

Um dem Schweißer optimale Flexibilität bieten zu können, ist der Rohrbogen 19 des Schweißbrenners 7 vorzugsweise um 360° verdrehbar. Zum Zwecke des Verdrehens wird die Überwurfmutter 24 leicht gelöst, sodass das allfällige stiftförmige Element 36 aus der Aufnahmeöffnung 26 ausgelenkt werden kann und in die gewünschte Position verdreht werden kann. Danach wird die Überwurfmutter 24 wieder angezogen, sodass eine optimale Verbindung zwischen Steckerteil 21 und Buchsenteil 34 geschaffen wird.

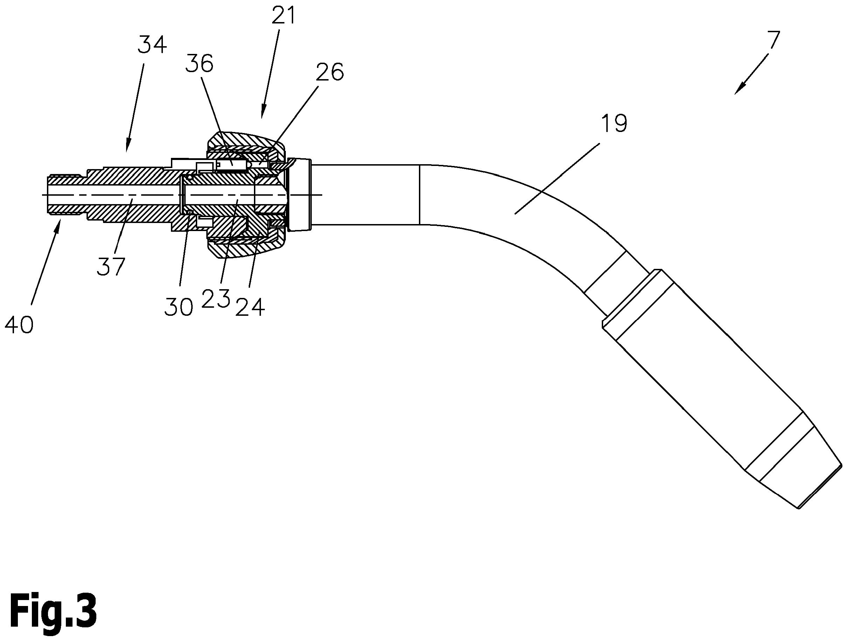

In Fig. 3 ist der Rohrbogen 19 mit Steckerteil 21 und Buchsenteil 34 gemäß Fig. 2 in verbundenem Zustand teilweise geschnitten dargestellt. In der dargestellten Position befindet sich der Rohrbogen 19 in der festgelegten Winkelposition bzw. Bezugslage, in der das stiftförmige Element 36 in die Aufnahmeöffnung 26 ragt.

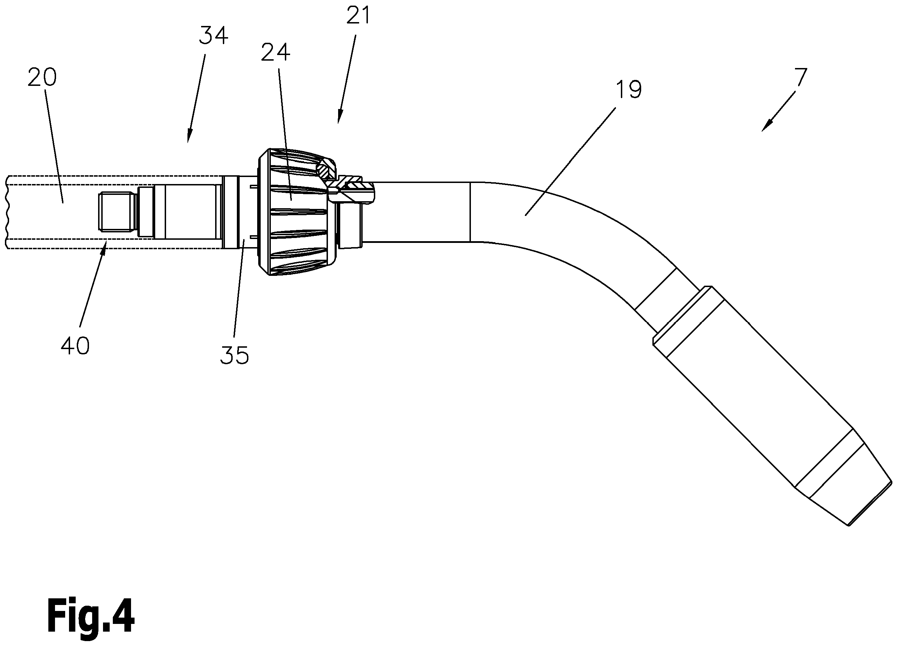

Fig. 4 zeigt den Rohrbogen 19 mit Steckerteil 21 und Buchsenteil 34 gemäß Fig. 2 in verbundenem Zustand in teilweise geschnittener Darstellung. In dieser Abbildung ist ein mit dem Buchsenteil 34 verbundenes Schlauchpaket 20 angedeutet. Die Überwurfmutter 24 bzw. deren Kunststoffumhüllung 33 kann mit axial verlaufenden Riefen oder dgl. versehen sein, um die Handhabung der Überwurfmutter 24 zu erleichtern.

Aus der Stirnansicht auf den mit dem Rohrbogen 19 verbundenen Steckerteil 21 gemäß Fig. 5 ist die allfällige Aufnahmeöffnung 26 am Steckerteil 21 erkennbar. Wie bereits erwähnt können auch mehrere Aufnahmeöffnungen 26 am Steckerteil 21 angeordnet sein um mehrere Bezugslagen für den Rohrbogen 19 herzustellen.

Fig. 6 zeigt eine Stirnansicht auf den Buchsenteil 34 gemäß den Fig. 2 bis 4 aus welcher die erfindungsgemäßen Schlitze 39 im Endstück 35 des Buchsenteils 34 ersichtlich sind. Auch das federnd gelagerte stiftförmige Element 36, welches im Endstück 35 vorgesehen sein kann, ist dargestellt.

Schließlich zeigt Fig. 7 eine Seitenansicht auf den Buchsenteil 34 gemäß den Fig. 2 bis 4 in ungeschnittener Darstellung. Ein derartig konstruierter Buchsenteil 34 kann relativ einfach und kostengünstig hergestellt werden und stellt eine optimale Verbindung mit dem zugehörigen Steckerteil 21 in der Verbindungseinrichtung zur lösbaren Verbindung eines Rohrbogens 19 eines gasgekühlten Schweißbrenners 7 mit einem Schlauchpaket bzw. einem Brennergehäuse dar.

Um zu verhindern, dass ungeeignete Rohrbögen 19 mit dem Buchsenteil 34 der Verbindungseinrichtung verbunden werden können, ist es von Vorteil, wenn die Dimensionen der Verbindungseinrichtung, beispielsweise bei gasgekühlten Schweißbrennern 7 und wassergekühlten Schweißbrennern, unterschiedlich gewählt werden. Somit kann verhindert werden, dass ein Rohrbogen 19 für einen gasgekühlten Schweißbrenner 7 mit einem Schlauchpaket für einen wassergekühlten Schweißbrenner verbunden wird und umgekehrt.

## Patentansprüche

1. Steckerteil (21) zur lösbaren Verbindung eines Rohrbogens (19) eines gasgekühlten Schweißbrenners (7) mit einem an einem Schlauchpaket (20) allenfalls unter Zwischenanordnung eines Brennergehäuses (7') angeordneten Buchsenteil (34), mit einem zylindrischen Rohrelement (22) mit einem Flansch (25) und einem axial verlaufenden Kanal (23) für einen Schweißdraht (9) und ein Schutzgas (5), und einer drehbar am Rohrelement (22) angeordneten Überwurfmutter (24) mit einem Innengewinde zur Verbindung mit einem entsprechenden Außengewinde am Buchsenteil (34), **dadurch gekennzeichnet, dass** am Rohrelement (22) zumindest ein Dichtungsring (30) angeordnet ist, weiters am Flansch (25) des Rohrelements (22) eine Fase (32) angeordnet ist, und dass am Flansch (25) des Rohrelements (22) zumindest eine durch eine Bohrung gebildete Aufnahmeöffnung (26) zur Aufnahme eines federnd gelagerten stiftförmigen Elements (36) mit einem im Wesentlichen halbkugelförmigen Ende (38) des Buchsenteils (34) zur Festlegung zumindest einer Winkelposition des Rohrbogens (19) angeordnet ist, so dass bei Lösung der Überwurfmutter (24) der Rohrbogen (19) des Schweißbrenners (7) vorzugsweise um 360° verdrehbar ist, indem das stiftförmige Element (36) aus der Aufnahmeöffnung (26) auslenkbar und in die gewünschte Position verdrehbar ist.

2. Steckerteil (21) nach Anspruch 1, **dadurch gekennzeichnet, dass** die Überwurfmutter (24) das Ende (27) des Rohrelements (22) überragt, und ein Anschlagelement (28) zur Verhinderung eines axialen Verschiebens der Überwurfmutter (24) hinter das Ende (27) des Rohrelements (22) vorgesehen ist.

3. Steckerteil (21) nach Anspruch 1 oder 2, **dadurch gekennzeichnet, dass** zwischen der Überwurfmutter (24) und dem Flansch (25) des Rohrelements (22) ein Gleitring (31) aus elektrisch leitfähigem Material angeordnet ist.

4. Steckerteil (21) nach einem der Ansprüche 1 bis 3, **dadurch gekennzeichnet, dass** die Überwurfmutter (24) in Richtung des freien Endes des Rohrbogens (19) kleiner werdenden Durchmesser aufweist, und vorzugsweise kegelstumpfförmig ausgebildet ist.

5. Steckerteil (21) nach einem der Ansprüche 1 bis 4, **dadurch gekennzeichnet, dass** die Überwurfmutter (24) eine Kunststoffumhüllung (33) aufweist.

6. Buchsenteil (34) zur lösbaren Verbindung eines Schlauchpakets (20) mit einem an einem Rohrbogen (19) eines gasgekühlten Schweißbrenners (7) angeordneten Steckerteil (21), mit einem zumindest teilweise zylindrisch ausgebildeten Endstück (35) mit einem axial verlaufenden Kanal (37) für einen Schweißdraht (9) und ein Schutzgas (5), und mit einem Außengewinde zur Verbindung mit einem entsprechenden Innengewinde einer Überwurfmutter (24) des Steckerteils (21), **dadurch gekennzeichnet, dass** am Endstück (35) eine mit einer Fase (32) am Flansch (25) eines zylindrischen Rohrelements (22) des zu verbindenden Steckerteils (21) korrespondierenden Fase (45) angeordnet ist, das Endstück (35) zwei kreuzweise angeordnete Schlitze (39) aufweist, und ein in Richtung des zu verbindenden Steckerteils (21) federnd gelagertes stiftförmiges Element (36) mit einem im Wesentlichen halbkugelförmigen Ende (38) vorgesehen ist, welches zur Festlegung zumindest einer Winkelposition des Rohrbogens (19) von zumindest einer durch eine Bohrung gebildeten Aufnahmeöffnung (26) im Steckerteil (21) aufnehmbar ist.

7. Verbindungseinrichtung zur lösbaren Verbindung eines Rohrbogens (19) eines gasgekühlten Schweißbrenners (7) mit einem Schlauchpaket (20), wobei der Rohrbogen (19) einen Steckerteil (21) nach einem der Ansprüche 1 bis 5 und das Schlauchpaket (20) einen Buchsenteil (34) nach Anspruch 6 aufweist.

8. Verbindungseinrichtung nach Anspruch 7, **dadurch gekennzeichnet, dass** der Steckerteil (21) mit dem Rohrbogen (19) verbunden, vorzugsweise verlötet, ist.

9. Verbindungseinrichtung nach Anspruch 7 oder 8, **dadurch gekennzeichnet, dass** der Buchsenteil (34) mit dem Ende eines Schlauchpakets (20) allenfalls unter Zwischenanordnung eines Brennergehäuses (7') verbunden ist.

10. Verbindungseinrichtung nach einem der Ansprüche 7 bis 9, **dadurch gekennzeichnet, dass** der Rohrbogen (19) gegenüber dem Schlauchpaket (20) um 360° verdrehbar ist, wobei zumindest eine Winkelposition des Rohrbogens (19) durch die zumindest eine Aufnahmeöffnung (26) im Steckerteil (21) und das stiftförmige Element (36) im Buchsenteil (34) festgelegt ist.

## Claims

1. Plug part (21) for detachably connecting a pipe bend (19) of a gas-cooled welding torch (7) to a socket part (34) arranged on a hose package (20), if need be with intermediate arrangement of a torch housing (7'), comprising a cylindrical pipe element (22) having a flange (25) and an axially extending channel (23) for a welding wire (9) and a protective gas (5), and a coupling nut (24) which is rotatably arranged on the pipe element (22) and has an internal thread for connection to a corresponding external thread on the socket part (34), **characterised in that** at least one sealing ring (30) is arranged on the pipe element (22), a bevel (32) is further arranged on the flange (25) of the pipe element (22), and **in that** at least one receiving opening (26), formed by a bore, for receiving a resiliently mounted pin-like element (36) of the socket part (34) that has a substantially hemispherical end (38), is arranged on the flange (25) of the pipe element (22) in order to fix at least one angular position of the pipe bend (19), such that, when the coupling nut (24) is released, the pipe bend (19) of the welding torch (7) can preferably be rotated by 360°, **in that** the pin-like element (36) can be deflected out of the receiving opening (26) and rotated into the desired position.

2. Plug part (21) according to claim 1, **characterised in that** the coupling nut (24) projects beyond the end (27) of the pipe element (22), and an abutment element (28) is provided behind the end (27) of the pipe element (22) to prevent an axial displacement of the coupling nut (24).

3. Plug part (21) according to either claim 1 or claim 2, **characterised in that** a sliding ring (31) made of an electrically conductive material is arranged between the coupling nut (24) and the flange (25) of the pipe element (22).

4. Plug part (21) according to any of claims 1 to 3, **characterised in that** the coupling nut (24) has a diameter which decreases in the direction of the free end of the pipe bend (19), and is preferably of frustoconical shape.

5. Plug part (21) according to any of claims 1 to 4, **characterised in that** the coupling nut (24) has a plastics sheath (33).

6. Socket part (34) for detachably connecting a hose package (20) to a plug part (21) arranged on a pipe bend (19) of a gas-cooled welding torch (7), comprising an at least partially cylindrical end piece (35) having an axially extending channel (37) for a welding wire (9) and a protective gas (5), and an external thread for connection to a corresponding internal thread of a coupling nut (24) of the plug part (21), **characterised in that** a bevel (45) is arranged on the end piece (35), which bevel corresponds to a bevel (32) on the flange (25) of a cylindrical pipe element (22) of the plug part to be connected (21), the end piece (35) has two slots (39) arranged crosswise, and a pin-like element (36), which is resiliently mounted in the direction of the plug part (21) to be connected and has a substantially hemispherical end (38), is provided, which element can be received by at least one receiving opening (26) formed by a bore in the plug part (21) in order to fix at least one angular position of the pipe bend (19).

7. Connecting device for detachably connecting a pipe bend (19) of a gas-cooled welding torch (7) to a hose package (20), wherein the pipe bend (19) has a plug part (21) according to any of claims 1 to 5 and the hose package (20) has a socket part (34) according to claim 6.

8. Connecting device according to claim 7, **characterised in that** the plug part (21) is connected, preferably soldered, to the pipe bend (19).

9. Connecting device according to either claim 7 or claim 8,
**characterised in that** the socket part (34) is connected to the end of a hose package (20), if need be with intermediate arrangement of a torch housing (7').

10. Connecting device according to any of claims 7 to 9, **characterised in that** the pipe bend (19) can be rotated by 360° with respect to the hose package (20), at least one angular position of the pipe bend (19) being fixed by the at least one receiving opening (26) in the plug part (21) and the pin-like element (36) in the socket part (34).

## Revendications

1. Partie mâle (21) pour la liaison libérable d'un coude (19) d'un chalumeau de soudage (7) refroidi par gaz avec une partie femelle (34) disposée sur un faisceau de flexibles (20) éventuellement avec intercalage d'un boîtier de chalumeau (7'), avec un élément tubulaire (22) cylindrique avec une bride (25) et un canal (23) s'étendant axialement pour un fil à souder (9) et un gaz protecteur (5), et un écrou d'accouplement (24) disposé de manière rotative sur l'élément tubulaire (22) avec un filetage intérieur pour la liaison à un filetage extérieur correspondant sur la partie femelle (34), **caractérisée en ce qu'**au moins une bague d'étanchéité (30) est disposée sur l'élément tubulaire (22), en outre un chanfrein (32) est disposé sur la bride (25) de l'élément tubulaire (22), et qu'au moins une ouverture de réception (26) formée par un trou pour la réception d'un élément en forme de tige (36) monté élastiquement avec une extrémité (38) sensiblement hémisphérique de la partie femelle (34) pour la fixation d'au moins une position angulaire du coude (19) est disposée sur la bride (25) de l'élément tubulaire (22), de sorte que lors du desserrage de l'écrou d'accouplement (24) le coude (19) du chalumeau de soudage (7) peut être amené en rotation de préférence de 360°, du fait que l'élément en forme de tige (36) peut être dévié hors de l'ouverture de réception (26) et peut être amené en rotation dans la position souhaitée.

2. Partie mâle (21) selon la revendication 1, **caractérisée en ce que** l'écrou d'accouplement (24) fait saillie de l'extrémité (27) de l'élément tubulaire (22), et un élément de butée (28) est prévu pour empêcher un déplacement axial de l'écrou d'accouplement (24) derrière l'extrémité (27) de l'élément tubulaire (22).

3. Partie mâle (21) selon la revendication 1 ou 2, **caractérisée en ce qu'**une bague de glissement (31) composée d'un matériau électroconducteur est disposée entre l'écrou d'accouplement (24) et la bride (25) de l'élément tubulaire (22).

4. Partie mâle (21) selon l'une quelconque des revendications 1 à 3, **caractérisée en ce que** l'écrou d'accouplement (24) présente des diamètres diminuant en direction de l'extrémité libre du coude (19), et est réalisé de préférence de manière tronconique.

5. Partie mâle (21) selon l'une quelconque des revendications 1 à 4, **caractérisée en ce que** l'écrou d'accouplement (24) présente une enveloppe plastique (33).

6. Partie femelle (34) pour la liaison libérable d'un faisceau de flexibles (20) à une partie mâle (21) disposée sur un coude (19) d'un chalumeau de soudage (7) refroidi par gaz, avec un embout (35) réalisé au moins en partie de manière cylindrique avec un canal (37) s'étendant axialement pour un fil à souder (9) et un gaz protecteur (5), et avec un filetage extérieur pour la liaison à un filetage intérieur correspondant d'un écrou d'accouplement (24) de la partie mâle (21), **caractérisée en ce qu'**un chanfrein (45) correspondant à un chanfrein (32) sur la bride (25) d'un élément tubulaire (22) cylindrique de la partie mâle (21) à relier est disposé sur l'embout (35), l'embout (35) présente deux fentes (39) disposées en croix, et un élément en forme de tige (36) monté élastiquement en direction de la partie mâle (21) à relier avec une extrémité (38) sensiblement hémisphérique est prévu, lequel pour la fixation au moins d'une position angulaire du coude (19) peut être reçu par au moins une ouverture de réception (26) formée par un trou dans la partie mâle (21).

7. Dispositif de liaison pour la liaison libérable d'un coude (19) d'un chalumeau de soudage (7) refroidi par gaz à un faisceau de flexibles (20), dans lequel le coude (19) présente une partie mâle (21) selon l'une quelconque des revendications 1 à 5 et le faisceau de flexibles (20) présente une partie femelle (34) selon la revendication 6.

8. Dispositif de liaison selon la revendication 7, **caractérisé en ce que** la partie mâle (21) est reliée, de préférence brasée, au coude (19).

9. Dispositif de liaison selon la revendication 7 ou 8, **caractérisé en ce que** la partie femelle (34) est reliée à l'extrémité d'un faisceau de flexibles (20) éventuellement avec intercalage d'un boîtier de chalumeau (7').

10. Dispositif de liaison selon l'une quelconque des revendications 7 à 9, **caractérisé en ce que** le coude (19) peut être amené en rotation de 360° par rapport au faisceau de flexibles (20), dans lequel au moins une position angulaire du coude (19) est fixée par la au moins une ouverture de réception (26) dans la partie mâle (21) et l'élément en forme de tige (36) dans la partie femelle (34).
